(19) Europäisches Patentamt
European Patent Office
Office européen des brevets

(11) **EP 4 064 057 B1**

(12) **EUROPEAN PATENT SPECIFICATION**

(45) Date of publication and mention
of the grant of the patent:
**26.07.2023 Bulletin 2023/30**

(21) Application number: **21305374.7**

(22) Date of filing: **24.03.2021**

(51) International Patent Classification (IPC):
**G06F 30/3315** (2020.01)     **G06F 11/36** (2006.01)
**G06F 119/12** (2020.01)

(52) Cooperative Patent Classification (CPC):
**G06F 30/3315;** G06F 11/3608; G06F 2119/12

(54) **METHOD AND SYSTEM FOR CORRECTING THE OPERATION OF A TARGET COMPUTER SYSTEM BY USING TIMED REQUIREMENTS**

VERFAHREN UND SYSTEM ZUM KORRIGIEREN DES BETRIEBS EINES ZIELRECHNERSYSTEMS UNTER VERWENDUNG VON ZEITGESTEUERTEN ANFORDERUNGEN

PROCÉDÉ ET SYSTÈME POUR CORRIGER LE FONCTIONNEMENT D'UN SYSTÈME INFORMATIQUE CIBLE AU MOYEN D'EXIGENCES TEMPORISÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.09.2022 Bulletin 2022/39**

(73) Proprietors:
• **Mitsubishi Electric R&D Centre Europe B.V.**
**1119 NS Schiphol Rijk Amsterdam (NL)**
Designated Contracting States:
**FR**
• **Mitsubishi Electric Corporation**
**Tokyo 100-8310 (JP)**
Designated Contracting States:
**AL AT BE BG CH CY CZ DE DK EE ES FI GB GR HR HU IE IS IT LI LT LU LV MC MK MT NL NO PL PT RO RS SE SI SK SM TR**
• **Institut National de Recherche en Informatique et en Automatique**
**78150 Le Chesnay-Rocquencourt (FR)**

(72) Inventors:
• **NOGUCHI, Reiya**
**35708 Rennes Cedex 7 (FR)**
• **JÉRON, Thierry**
**35042 Rennes Cédex (FR)**
• **MARKEY, Nicolas**
**35042 Rennes Cédex (FR)**
• **SANKUR, Ocan**
**35042 Rennes Cédex (FR)**

(74) Representative: **Plasseraud IP**
**66, rue de la Chaussée d'Antin**
**75440 Paris Cedex 09 (FR)**

(56) References cited:
• **Jéron T., Markey N., Mentré D., Noguchi R., Sankur O.: "Incremental Methods for Checking Real-Time Consistency", 25 August 2020 (2020-08-25), ADVANCES IN INTELLIGENT DATA ANALYSIS XIX; [LECTURE NOTES IN COMPUTER SCIENCE; LECT.NOTES COMPUTER], PAGE(S) 249 - 264, XP047587727, ISSN: 0302-9743 ISBN: 978-3-030-57628-8 DOI: https://doi.org/10.1007/978-3-030-57628-8_ 15, * Abstract, Sections 1, 2.4, 3, 5 ***
• **POST AMALINDA ET AL: "Formalization and Analysis of Real-Time Requirements: A Feasibility Study at BOSCH", 28 January 2012 (2012-01-28), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 225 - 2, XP047371198, ISBN: 978-3-642-17318-9 * Abstract, Sections 1, 2.3, 4.1, 6 ***

• POST AMALINDA ET AL: "rt-Inconsistency: A New Property for Real-Time Requirements", 26 March 2011 (2011-03-26), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 34 - 49, XP047432027, ISBN: 978-3-642-17318-9 * the whole document *

**Description**

<u>TECHNICAL FIELD</u>

This disclosure relates to requirement engineering for computer systems and relates more specifically to a method and system for correcting the operation of a target computer system by using timed requirements.

<u>BACKGROUND ART</u>

In the process of developing computer systems, requirement engineering consists in defining, documenting and maintaining the requirements that a computer system needs to comply with. Requirements can be of different nature but, in computer systems, timed requirements are of importance. Basically, a timed requirement corresponds to constraints, including timing constraints, between outputs of the computer system and inputs to said computer system. In practice, timed requirements will be the basis of the design and development of the computer system. Also, timed requirements will partly drive the validation campaign in order to check that they are indeed complied by the actual computer system, once developed.

Of course, it is of primary importance to design timed requirements that are consistent, i.e. that are not contradictory such that implementations conforming with said timed requirements are indeed possible and may be designed and developed.

In the scientific literature, there exist different consistency notions defined for timed requirements of real-time systems. For instance, real-time consistency (a.k.a. RT-consistency) [PHP11] requires that all finite execution sequences that do not already violate some timed requirement have an extension that satisfies all of them. Put differently, this means that if an implementation produces a finite execution sequence whose all continuations necessarily lead to the violation of some timed requirement, then there must be a timed requirement that is already violated by the finite execution sequence.

However, once an inconsistency of a set of timed requirements is detected, or another issue, the set of timed requirements needs to be corrected, which can be extremely complex even for an experienced requirement engineer.

Methods for detecting the real-time consistency of a given set of requirements are disclosed in Jéron T., Markey N., Mentré D., Noguchi R., Sankur O.: "Incremental Methods for Checking Real-Time Consistency", 25 August 2020 (2020-08-25), ADVANCES IN INTELLIGENT DATA ANALYSIS XIX; [LECTURE NOTES IN COMPUTER SCIENCE; LECT.NOTES COMPUTER], PAGE(S) 249 - 264, XP047587727,ISSN: 0302-97431SBN: 978-3-030-57628-8DOI: https:// doi.org/10.1007/978-3-030-57628-8_15

Additional background on formalizing and analyzing real-time requirements is provided in POST AMALINDA ET AL: "Formalization and Analysis of Real-Time Requirements: A Feasibility Study at BOSCH", 28 January 2012 (2012-01-28), ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER], SPRINGER, BERLIN, HEIDELBERG, PAGE(S) 225 - 2, XP047371198,ISBN: 978-3-642-17318-9

<u>SUMMARY</u>

The present disclosure aims at proposing a solution for correcting automatically, by a correcting computer system, inconsistencies of a set of timed requirements describing the operation of a target computer system.

According to a first aspect, the present disclosure relates to a computer implemented method for correcting the operation of a target computer system. The operation of the target computer system is constrained by a set of timed requirements, and an execution sequence of the target computer system, referred to as witness trace, satisfies a criterion for detecting a conflict between timed requirements of the set of timed requirements, referred to as inconsistency. The set of timed requirements comprises a first subset and a second subset of timed requirements. The method comprises initializing a set of constraints based on said witness trace, and iterating steps of:

- modifying the second subset of timed requirements to obtain an updated set of timed requirements for which each constraint in the set of constraints is satisfied;
- searching for a further witness trace of the inconsistency of the updated set of timed requirements;
- when a further witness trace is found: augmenting the set of constraints based on said further witness trace;

wherein the operation of the target computer system is considered corrected when no further witness trace is found for an updated set of timed requirements.

The target computer system may be any computer system for which timed requirements may be defined, such as an embedded electronic system and/or mechatronic system and/or a mechanical control system, etc.

The operation of the target computer system is constrained by a set of timed requirements. Correcting the operation of the target computer system relies on evaluating said operation by simulating the behavior of the target computer system at the timed requirement level, in order to detect e.g. inconsistencies among the timed requirements and/or vacuous timed requirements. Correcting the operation of the target computer system therefore corresponds to correcting the set of timed requirements which constrain the operation of said target computer system. Hence, it is emphasized that the correcting method does not interact with the actual target computer system, which may not be designed or developed yet, but evaluates the operation of the target computer system by simulating its behavior at the timed requirement level. Accordingly, the correcting method is carried out by a correcting computer system that is different from the target computer system.

As discussed above, a timed requirement may be viewed as constraints, including timing constraints, between outputs of the target computer system and inputs to said target computer system.

The correcting method uses execution sequences of the target computer system, referred to as "witness traces", that lead to conflicts between timed requirements, i.e. that lead to at least one timed requirement being violated. An execution sequence basically corresponds a sequence of inputs to the target computer system and resulting outputs from said target computer system at successive time steps. A timed requirement is violated when the constraints it defines cannot be satisfied at some point. The witness trace itself does not violate a timed requirement yet. However, the witness trace is not prevented to occur by the considered timed requirements and yet it reaches a configuration of the target computer system from which at least one timed requirement will be necessarily violated at some point.

When such a witness trace demonstrating the inconsistency (e.g. RT-inconsistency) of the set of timed requirements is found, it is used to define a (trace-based) constraint which is included in a set of constraints.

Then the correcting method iteratively modifies a second subset of timed requirements, while maintaining unchanged a first subset of timed requirements, to obtain a modified second subset such that each constraint in the set of constraints is satisfied. For instance, for a witness trace $\sigma$, the constraint included in the set of constraints may require that said witness trace $\sigma$ is prevented from occurring when considering the updated set (combining the first subset and the modified second subset) or that it ceases to be an inconsistency witness trace when considering the updated set.

Once such a modified subset is found (satisfying all the constraints of the set of constraints), it is further verified whether further issues are detected for the updated set. For instance, it is verified whether a further witness trace of the inconsistency of the updated set can be found. If such a further witness trace can be found, then the set of constraints is incremented with a further constraint based on said further witness trace (i.e. this constraint is added to the other previous constraints present in the set of constraints).

Hence, the set of constraints is iteratively incremented with constraints which are defined by witness traces. When modifying the second subset of timed requirements, such trace-based constraints can be easily verified, such that a modified second subset satisfying all the constraints can be searched for with a reasonable computational complexity. When no further witness trace is found for an updated set, then this updated set can replace the original set, thereby correcting the operation of the target computer system.

In specific embodiments, the correcting method can further comprise one or more of the following features, considered either alone or in any technically possible combination.

In specific embodiments, the correcting method comprises iterating steps of:

- searching for a timed requirement in the first subset, referred to as vacuous timed requirement, which cannot be triggered when considering the updated set of timed requirements;
- when a vacuous timed requirement is found: determining an execution sequence, referred to as triggering trace, which triggers the vacuous timed requirement when considering the first subset of timed requirements, and augmenting the set of constraints based on said triggering trace;

wherein the operation of the target computer system is considered corrected when no further witness trace and no vacuous timed requirement is found for an updated set of timed requirements.

Hence, it is also possible to correct not only the consistency of the updated set but also its non-vacuity. Once a modified second subset is found (such that the updated set satisfies all the constraints of the set of constraints), it is further verified whether one or more timed requirements of the first subset have become vacuous due to the modifications made to the second subset. If such a vacuous timed requirement is found, then an execution sequence that triggered said timed requirement before modifying the second subset, referred to as "triggering trace", is identified and used to add a further constraint to the set of constraints. For instance, the added constraint may require that the modified second subset of subsequent iterations does not prevent said triggering trace to occur, thereby removing the vacuity. Again, such (triggering) trace-based constraint can be easily verified.

In specific embodiments, augmenting the set of constraints based on a further witness trace of the inconsistency of the first subset of timed requirements comprises adding a constraint requiring that the modified second subset of timed requirements of subsequent iterations prevents said further witness trace to occur.

In specific embodiments, augmenting the set of constraints based on a further witness trace of the inconsistency of the updated set of timed requirements which is not a witness trace of the inconsistency of the first subset of timed requirements comprises adding a constraint requiring that:

- either the modified second subset of timed requirements of subsequent iterations prevents said further witness trace to occur;
- or said further witness trace is not a witness trace of the inconsistency of the updated set of timed requirements of subsequent iterations.

In specific embodiments, the operation of a target computer system is initially constrained by the first subset of timed requirements and correcting the operation of the target computer system comprises adding the second subset of timed requirements to the first subset of timed requirements.

In specific embodiments, the correcting method comprises determining a subset of parameters of the set of timed requirements based on the witness trace, and determining the first and the second subset based on the subset of parameters, wherein the second subset is modified by modifying only parameters in said subset of parameters.

In specific embodiments, the second subset is modified such that a distance between any modified second subset and the initial second subset does not exceed a predetermined maximum distance.

In specific embodiments, the criterion for detecting a conflict is satisfied when an RT-inconsistency is detected.

In specific embodiments, the second subset of timed requirements is modified to obtain an updated set of timed requirements for which each constraint in the set of constraints is satisfied and for which all timed requirements in the modified second subset can be triggered when considering the updated set of timed requirements.

In specific embodiments, the correcting method comprises augmenting the set of constraints based on a desired trace that can occur when considering the original set of timed requirements but is prevented from occurring by an updated set of timed requirements. This is advantageous for it prevents from reducing too drastically the set of possible execution sequences (traces) when correcting the set of timed requirements. Indeed, defining a constraint based on a desired trace ensures that said desired trace will remain in the set of possible execution sequences (i.e. correcting the set of timed requirements will not prevent the desired trace from occurring). The constraint added to the set of constraints typically requires that the updated set of subsequent iterations does not prevent said desired trace to occur.

In specific embodiments, searching for a witness trace or a triggering trace uses a Satisfiability Modulo Theories, SMT, solver.

In specific embodiments, each timed requirement is modeled as a Simplified Universal Pattern, SUP. SUPs are a type of timed requirements, for which computationally efficient specific consistency checking tools exist.

According to a second aspect, the present disclosure relates to a computer program product comprising instructions which, when executed by at least one processor, configure said at least one processor to carry out a correcting method according to any one of the embodiments of the present disclosure.

According to a third aspect, the present disclosure relates to a computer-readable storage medium comprising instructions which, when executed by at least one processor, configure said at least one processor to carry out a correcting method according to any one of the embodiments of the present disclosure.

According to a fourth aspect, the present disclosure relates to a correcting computer system for correcting the operation of a target computer system, said correcting computer system comprising at least one processor configured to carry out a correcting method according to any one of the embodiments of the present disclosure.

It should be noted that the present disclosure may also be applied when the original set is only vacuous, i.e. no conflict between timed requirements is detected but one or more timed requirements cannot be triggered in the original set of timed requirements.

Hence, according to a fifth aspect, the present disclosure relates to a computer implemented method for correcting the operation of a target computer system, said operation of the target computer system being constrained by a set of timed requirements comprising a first subset and a second subset of timed requirements, wherein a timed requirement of the first subset, referred to as vacuous timed requirement, cannot be triggered when considering the set of timed requirements, and an execution sequence, referred to as triggering trace, triggers the vacuous timed requirement when considering the first subset, wherein said method comprises initializing a set of constraints based on said triggering trace, and iterating steps of:

- modifying the second subset of timed requirements to obtain an updated set of timed requirements for which each constraint in the set of constraints is satisfied;
- searching for a further vacuous timed requirement in the first subset which cannot be triggered when considering the updated set of timed requirements;
- when a further vacuous timed requirement is found: determining a further triggering trace which triggers the further vacuous timed requirement when considering the first subset of timed requirements, and augmenting the set of constraints based on said triggering trace;

wherein the operation of the target computer system is considered corrected when no further vacuous timed requirement is found for an updated set of timed requirements.

## BRIEF DESCRIPTION OF DRAWINGS

The invention will be better understood upon reading the following description, given as an example that is in no way limiting, and made in reference to the figures which show:

- Figure 1: a schematic representation of a timed requirement modeled as a Simplified Universal Pattern, SUP;
- Figure 2: a schematic representation of an exemplary timed requirement modeled as a timed automaton;
- Figure 3: a diagram representing the main steps of an exemplary embodiment of a correcting method;
- Figure 4: a diagram representing the main steps of a preferred embodiment of a correcting method.

In these figures, references identical from one figure to another designate identical or analogous elements. For reasons of clarity, the elements shown are not to scale, unless explicitly stated otherwise.

## DESCRIPTION OF EMBODIMENTS

The present disclosure relates to a method 30 and system for correcting the operation of a target computer system, wherein the operation of the target computer system is constrained by a set of timed requirements.

We first introduce some definitions and conventions used in the following non-limitative description, and then we present different embodiments of the correcting method 30.

### A. Definitions

We consider target computer systems (such as Programmable Logic Controllers or PLCs) whose behaviors are driven by the observation of Boolean variables and are subject to discrete timing constraints. Intuitively, a run of the target computer system can be understood as a sequence of time steps at which the value of Boolean variables is observed, the evolution of the target computer system being governed by both timing constraints and the Boolean value of these Boolean variables.

For this kind of target computer systems, timed requirements can for example be represented by timed automata such as those described in [AD90], with specific restrictions, but extended with Boolean variables.

### A.1. Timed automata

Timed automata (TA) [AD90] extend finite-state automata with variables, called clocks, that can be used to measure (and impose constraints on) delays between various events along executions. More precisely, given a set $X = \{c_i | 1 \leq i \leq k\}$ of clocks, the set of constraints allowed for a timed automaton is defined using the following grammar:

$$\mathcal{C}_{TR}(\mathcal{X}) \ni g ::= c \sim n \mid g \wedge g$$

where $c$ ranges over $X$, $n$ ranges over $\mathbb{N}$, $\sim$ ranges over $\{<, \leq, =, \geq, >\}$, and the operator $\wedge$ corresponds to the logical "AND". We consider integer-valued clocks. The semantics of such clock constraints may be defined as follows: given a clock valuation $v \colon \mathcal{X} \to \mathbb{N}$, that a constraint $g \in \mathcal{C}_{TR}(\mathcal{X})$ holds true at $v$, denoted $v|=g$, is defined inductively as follows:

$v|=g \sim n$ if, and only if, $v(c) \sim n$
$v|=g_1 \wedge g_2$ if, and only if, $v|=g_1$ and $v|=g_2$.

For a valuation $v \colon \mathcal{X} \to \mathbb{N}$, an integer $d \in \mathbb{N}$, and a subset $R \subseteq X$, we define $v + d$ as the valuation $(v + d)(c) = v(c) + d$ for all $c \in X$, and $v[R \leftarrow 0]$ as $v[R \leftarrow 0](c) = 0$ if $c \in R$ and $v[R \leftarrow 0](c) = v(c)$ if $c \notin R$. R.Finally, we let **0** be the valuation mapping all variables to 0.

In our timed automata, we also consider the observation of the evolution of the target computer system through the values of Boolean variables. We thus consider a set AP = $\{b_i | 1 \leq i \leq n\}$ of atomic propositions, and we define the set of Boolean constraints $\mathcal{B}(\text{AP})$ as the set of all propositional formulas built on AP. Notice that those Boolean variables cannot be modified, but are only observed, since they belong to the target computer system itself, contrary to clocks that can be reset since they are owned by the timed requirement only and used by it to check timing constraints.

We consider timed automata over the alphabet 2^AP. For succinctness, transitions will be labelled with Boolean constraints on AP rather than with a list of sets of atomic propositions.

A timed automaton is a tuple $\mathcal{A} = \langle S, S_0, \text{AP}, \mathcal{X}, T, F \rangle$ where $S$ is a finite set of states, $S_0 \subseteq S$ is a set of initial states, $X$ is a finite set of clocks, $T \subseteq S \times \mathcal{B}(AP) \times \mathcal{C}_{TR}(\mathcal{X}) \times 2^{\mathcal{X}} \times S$ is a finite set of transitions, and $F \subseteq S$ is a subset of accepting states ($F = S \backslash E$ wherein $E$ is a subset of error states).

A configuration of a timed automaton is a pair (s,v) where $s \in S$ and $v \in \mathbb{N}^{\mathcal{X}}$. With a timed automaton $\mathcal{A}$, we associate the infinite-state automaton

$$\mathcal{S}(\mathcal{A}) = \langle Q, Q_0, \Sigma, D, Q_F \rangle$$

where:

- the set of states Q contains all configurations $(s, v) \in S \times \mathbb{N}^{\mathcal{X}}$;
- the initial states are obtained by adjoining the null valuation (all clocks are mapped to zero) to initial states $S_0$, i.e. $Q_0 = S_0 \times 0$;
- $\Sigma = 2^{AP}$ is the alphabet of actions, i.e. valuations of all Boolean variables;
- transitions in D are combinations of a transition of the timed automaton and a 1-time-unit delay. Formally, given $a \in \Sigma$ and two configurations (s,v) and (s', v'), there is a transition ((s,v), a, (s', v')) in D if, and only if, there is a transition (s, c, g, r, s') in T such that a|=c and v|=g, and v' = (v[r ← 0] + 1);
- $Q_F = F \times \mathbb{N}^{\mathcal{X}}$ is the set of accepting configurations.

It should be noted that the transition system

$$\mathcal{S}(\mathcal{A})$$

is infinite because we impose no bound on the values of the clocks during executions. However, as is classical in the setting of timed automata [AD90], we may notice that the exact value of a clock is irrelevant as soon as it exceeds the largest integer constant with which it is compared. We could thus easily modify the definition of

$$\mathcal{S}(\mathcal{A})$$

in such a way that it only contains finitely many states.

A run of $\mathcal{A}$ is a run of its associated infinite-state automaton

$$\mathcal{S}(\mathcal{A}).$$

It can be represented as a sequence along which configurations and actions alternate:

$$(s_0, v_0) \cdot \sigma_1 \cdot (s_1, v_1) \cdot \sigma_2 \cdots (s_l, v_l) \cdots.$$

An execution sequence (or trace) of this sequence is its projection on the set of actions. In other terms, it is a finite or infinite sequence $\sigma = \{\sigma_i\}_{0 \leq i \leq l}$ of actions where $l \in \mathbb{N} \cup \{+\infty\}$ is the length of $\sigma$, denoted with $|\sigma|$. Finite traces belong to $\Sigma^*$ and infinite ones to $\Sigma^\infty$. A finite run is accepted if it ends in $Q_F$. A trace $\sigma = \{\sigma_i\}_{0 \leq i \leq l}$ is accepted by $\mathcal{A}$ if there is an accepted run $(s_0, v_0) \cdot \sigma_1 \cdot (s_1, v_1) \cdot \sigma_2 \cdots (s_l, v_l)$ in $\mathcal{A}$.

In the sequel, we will need to consider several timed requirements, each of them specified by a timed automaton. To this aim, we define the product of timed automata. Formally, given two timed automata

$$\mathcal{A}_1 =$$

$$\langle S_1, S_{1,0}, \mathrm{AP}_1, \mathcal{X}_1, T_1, F_1 \rangle$$

and

$$\mathcal{A}_2 = \langle S_2, S_{2,0}, \mathrm{AP}_2, \mathcal{X}_2, T_2, F_2 \rangle$$

with disjoint clock sets (i.e., $X_1 \cap X_2 = \emptyset$), their product

$$\mathcal{A}_1 \otimes \mathcal{A}_2$$

is a timed automaton

$$\mathcal{A} =$$

$$\langle S, S_0, \mathrm{AP}, \mathcal{X}, T, F \rangle$$

where $S = S_1 \times S_2$, $S_0 = S_{1,0} \times S_{2,0}$, $AP = AP_1 \cup AP_2$, $X = X_1 \cup X_2$, $F = F_1 \times F_2$, and the set of transitions is defined as follows: there is a transition $((s_1, s_2), c, g, r, (s'_1, s'_2))$ in $T$ if there are transitions $(s_1, c_1, g_1, r_1, s'_1)$ in $T_1$ and $(s_2, c_2, g_2, r_2, s'_2)$ in $T_2$ with $c = c_1 \wedge c_2$, $g = g_1 \wedge g_2$, and $r = r_1 \cup r_2$.

This product of timed automata can be easily generalized to an arbitrary number of timed automata, and timed requirements that they specify. For a set $\mathcal{R} = \{R_i\}_{i \in I}$ of timed requirements, each specified by a timed automaton

$$\mathcal{A}_i(R_i),$$

we note $\otimes \mathcal{R}$ the timed requirement specified by the timed automaton

$$\otimes_{i \in I} \mathcal{A}_i(R_i).$$

## A.2. Execution sequences

In the sequel, we consider in a non-limitative manner that the timed automata are complete, meaning that from any (reachable) configuration $(s, v)$, and for any subset $\sigma$ of $AP$, there is a transition $t = (s,c,g,r,s')$ in $T$ such that $\sigma|=c$ and $v|=g$. Also, the timed automaton are considered in a non-limitative manner to be deterministic, i.e. for any two configurations $(a,c,g,r,s)$ and $(a,c',g',r',s')$ (hence starting from the same state $a$) such that both $c \wedge c'$ and $g \wedge g'$ are satisfiable, then $s = s'$ and $r = r'$.

Also, we consider in a non-limitative manner that the timed automata are safe, meaning that there are no transitions from $E = S\backslash F$ to $F$. Under such a condition, a run is accepted if and only if it never visits $E = S\backslash F$.

Notice that those properties are preserved when composing several timed automata. We use timed automata to encode timed requirements. Intuitively, entering an error state (i.e. leaving the subset $F$ of accepted states) of a timed automaton corresponds to violating the corresponding timed requirement. In the sequel, for any timed automaton $\mathcal{A}$ and any finite or infinite execution sequence (also referred to as "trace") $\sigma$, we write

$$\sigma |= \mathcal{A}$$

("$\sigma$ satisfies $\mathcal{A}$") if and only if $\sigma$ does not violate $\mathcal{A}$, i.e. running $\sigma$ on $\mathcal{A}$ does not visit F.

As discussed above, we consider a set AP = $\{b_i | 1 \leq i \leq n\}$ of atomic propositions. A valuation is of type AP $\rightarrow$ $\{\top, \bot\}$, wherein $\top$ means "true" and $\bot$ means "false". In preferred embodiments, a generalized valuation may be used, of type AP $\rightarrow \{\top, \bot, *\}$. In such generalized valuations, some atomic propositions are assigned to $*$, which stands for a "don't care" value, i.e. it is not important whether the value is actually $\top$ or $\bot$. We write $v \leq v'$ for two generalized valuations whenever for any $x \in$ AP, if $v'(x) \in \{\top, \bot\}$ or $v(x) = *$, then $v(x) = v'(x)$. In other words, $v \leq v'$ means that v is less generalized than $v'$. We define DontCare($v$) = $\{x \in$ AP $| v(x) = *\}$. This is the set of "don't care" variables of the valuation. Intuitively, a generalized valuation v represents the set of valuations $v'$ such that $v' \leq v$.

A trace $\sigma$ is therefore a sequence of valuations of length $|\sigma|$ and a generalized trace is a sequence of generalized valuations. A concretization of a generalized trace $\sigma$ is a trace $\sigma'$ such that for all $1 \leq i \leq |\sigma|$, $\sigma' i \leq \sigma_i$. A generalized trace then represents a set of traces, i.e. the set of the concretizations of said generalized trace.

We denote by AP$_i$ = $\{x_i | x \in$ AP$\}$ the set of $i$-th copies of atomic propositions. A (generalized) trace of length $k$ can be seen as a (generalized) valuation over AP$_1$, ..., AP$_k$. For a generalized trace $\sigma$, let DontCare($(\sigma)$ be the subset of AP$_1$ u ... u AP$_k$, that are assigned to $*$.

## A.3. Simplified Universal Patterns (SUP)

In this subsection, we describe a pattern language called Simplified Universal Pattern (SUP) [Bec19] that can be used to define timed requirements. Compared to timed automata, SUPs offer a more intuitive though less expressive way of writing timed requirements. All SUPs can be written as timed automata, but not all timed automata can be written using SUPs.

SUP instances can be denoted by:

$$(\text{TSE, TC, TEE})[\text{Tmin, Tmax}] \xrightarrow{[\text{Lmin, Lmax}]} (\text{ASE, AC, AEE})[\text{Amin, Amax}]$$

A SUP instance is thus defined by the choice of the Boolean formulas TSE, TC, TEE, ASE, AC, AEE, and durations Tmin, Tmax, Lmin, Lmax, Amin, Amax. The Boolean formulas are propositional formulas built from system Boolean variables in a set AP of atomic propositions. For simplicity, when talking about an individual SUP, we gather the values of these parameters in a vector P, and refer to its elements using the names of the parameters (e.g. $P_{\text{TSE}}$ is the value of the first parameter TSE). But we should remember that they are valuations of formulas, and when several SUPs are considered, since they may refer to some common Boolean variables, their valuations may interfere on those variables.

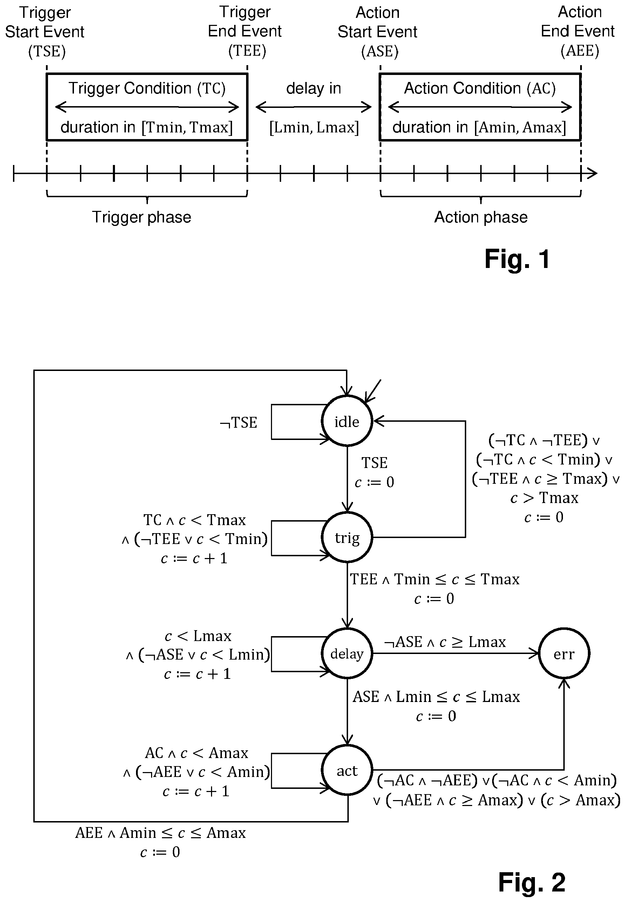

Figure 1 illustrates the intuitive semantics of SUP. Intuitively, the left part of a SUP defines a trigger phase, while the right part is the action phase. For a trigger phase to be realized, TSE ("Trigger Start Event") has to be true, and then confirmed within a duration in [Tmin, Tmax]. Confirmation means that TC ("Trigger Condition") holds until TEE ("Trigger End Event") occurs. Otherwise the trigger is aborted.

If the trigger phase is realized, for the SUP to be satisfied, its action phase should be started by ASE ("Action Start Event") within [Lmin, Lmax] time units, and then confirmed. That an action phase is realized is defined as for triggers, with a confirmation duration within [Amin, Amax], during which both AC ("Action Condition") holds until AEE ("Action End Event") occurs. Otherwise, the SUP is violated.

Figure 2 represents schematically an example of deterministic timed automaton that can be used to encode a SUP timed requirement, since a SUP timed requirement is a special case of a timed automata as defined above.

As can be seen in figure 2, the timed automaton encoding the SUP timed requirement has five states idle, trig, delay, act and err (wherein err is the only error state), and an associated clock $c$. Also, in figure 2, the operator v corresponds to the logical "OR" and the operator ¬ corresponds to the logical operator "NOT".

This timed automaton clearly exhibits the successive phases of a SUP. However, the real timed automaton we use to encode a SUP is the transitive closure of the timed automaton depicted on Figure 2. For instance, if both TSE and TEE hold true at the same time and Tmin = 0, then the transitions from idle to trig and from trig to delay have to be taken at the same time. All maximal simple (i.e. where no transitions may appear twice) sequences of transitions have to be merged this way, provided that the conjunctions of their Boolean constraints and clock guards (taking intermediary clock resets into account) can be satisfied.

For such a SUP, we define the set of Boolean parameters as $\mathcal{F}_b = \{$TSE, TC, TEE, ASE, AC, AEE$\}$ , and the set of time parameters as $\mathcal{F}_t = [$Tmin, Tmax, Lmin, Lmax, Amin, Amax$\}$ , and their union $\mathcal{F} = \mathcal{F}_b \cup \mathcal{F}_t$ . As discussed above, SUPs can be defined as a valuation $P$ of those parameters. We write SUP($P$) for the SUP with parameters defined by $P$, and

$$\mathcal{A}_{\text{SUP}(P)}$$

for the complete deterministic timed automaton corresponding to SUP(P).

In the rest, we consider in a non-limitative manner SUPs whose Boolean parameters are defined as conjunctive formulas. Also, we define the distance between two conjunctive formulas as:

$$d(l_1 \wedge ... \wedge l_m, l'_1 \wedge ... \wedge l'_m) = |\{l_1, ..., l_m\} \oplus \{l'_1, ..., l'_m\}|$$

where $\oplus$ denotes the symmetric difference. For two time bounds $T, T'$, we extend this definition to $d(T, T') = |T - T'|$. The distance between two SUPs with parameters P and P' is the sum of the distances of their parameters: $d(P, P') = \sum_{F \in \mathcal{F}} d(P_F, P'_F)$ . Furthermore, given two vectors of SUP requirements of the same size, $\mathcal{R} = \left( SUP(P_i) \right)_{1 \leq i \leq n}$ and $\mathcal{R}' = \left( SUP(P'_i) \right)_{1 \leq i \leq n}$ , we define $d(\mathcal{R}, \mathcal{R}') = \sum_{i=1}^{n} d(P_i, P'_i)$ .

### A.4. RT-consistency and non-vacuity

As discussed above, there exist different consistency notions defined for real-time systems' timed requirements, such as RT-consistency [PHP11], partial consistency [Bec19], etc. In the sequel, we consider in a non-limitative manner the case of RT-consistency notion introduced in [PHP11].

For any requirement $R$ defined by a complete deterministic timed automaton $\mathcal{A}$, and any finite or infinite trace $\sigma$, we denote $\sigma$ **fails** $R$ if running $\sigma$ in $R$ ultimately leaves the subset $F$ of accepting states. Similarly, we denote $\sigma$ I-fails $R$ if for all infinite traces $\sigma'$, the trace $\sigma. \sigma'$ ultimately leaves the subset $F$ of accepting states.

Hence, a set $\mathcal{R}$ of SUP requirements is RT-consistent if, for any finite trace $\sigma$, if $\sigma$ I-fails $\otimes \mathcal{R}$ then $\sigma$ fails $\otimes \mathcal{R}$ . A trace that demonstrates the RT-inconsistency, referred to as "witness trace", is then a finite trace $\sigma$ such that $\sigma$ I-fails $\otimes \mathcal{R}$ but not $\sigma$ fails $\otimes \mathcal{R}$ .

In the sequel, we will use also the notion of non-vacuity, which is basically existential consistency with a non-vacuity condition. A set $\mathcal{R}$ of SUP requirements is non-vacuous if for each $R \in \mathcal{R}$ , there exists a trace that satisfies $\mathcal{R}$ and that triggers $R$. Such a trace is referred to as "triggering trace".

### B. Correcting method

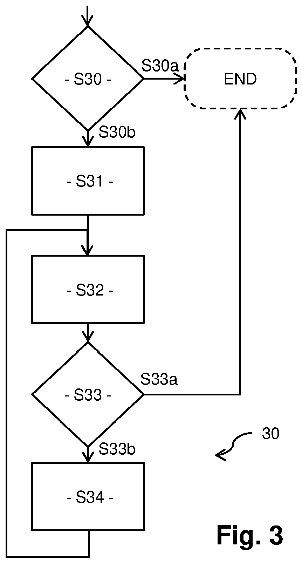

Figure 3 represents the main steps of a method 30 for correcting the operation of a target computer system (not represented in the figures).

The correcting method 30 is carried out by a correcting computer system (not represented in the figures). In preferred embodiments, the correcting computer system comprises one or more processors (which may belong to a same computer or to different computers) and storage means (magnetic hard disk, optical disk, electronic memory, or any computer readable storage medium) in which a computer program product is stored, in the form of a set of program-code instructions to be executed in order to implement all or part of the steps of the correcting method 30. Alternatively, or in combination thereof, the correcting computer system can comprise one or more programmable logic circuits (FPGA, PLD, etc.), and/or one or more specialized integrated circuits (ASIC), etc., adapted for implementing all or part of said steps of the correcting method 30. In other words, the correcting computer system comprises a set of means configured by software (specific computer program product) and/or by hardware (processor, FPGA, PLD, ASIC, etc.) to implement the steps of the correcting method 30.

The operation of the target computer system is constrained by a set $\mathcal{R}$ timed requirements.

As illustrated by figure 3, the correcting method 30 comprises a step S30 of evaluating a criterion for detecting a conflict between timed requirements of the set $\mathcal{R}$ of timed requirements. The conflict detection criterion may use different notions of inconsistency checking, but we consider in a non-limitative manner that RT-inconsistency is evaluated.

If the set $\mathcal{R}$ is considered to be RT-consistent (reference S30a in figure 3), then the execution of the correcting method 30 may stop. If the set $\mathcal{R}$ is considered to be RT-inconsistent (reference S30b in figure 3), typically by finding a trace $\sigma$ demonstrating the RT-inconsistency referred to as "witness trace", then the correcting method 30 comprises a step S31 of initializing a set

$$\mathcal{C}_\Sigma$$

of constraints by using the witness trace $\sigma$. The set

$$\mathcal{C}_\Sigma$$

gathers trace-based constraints (i.e. constraints derived from execution sequences) that need to be satisfied when modifying the set $\mathcal{R}$.

The set R of timed requirements is assumed to comprise a first subset $\mathcal{R}_1$ and a second subset $\mathcal{R}_2$ of timed requirements, and the correcting method 30 will then proceed to try and correct the set R of requirements by modifying the second subset $\mathcal{R}_2$ while maintaining the first subset $\mathcal{R}_1$ unchanged.

It should be noted that, in some embodiments, the first subset $\mathcal{R}_1$ may correspond to the original set of timed requirements constraining the operation of the target computer system, for which a RT-inconsistency is detected. In such a case, one or more new timed requirements, which compose the second subset $\mathcal{R}_2$, may be added to the first subset $\mathcal{R}_1$ in order to obtain a set $\mathcal{R} = \mathcal{R}_1 \cup \mathcal{R}_2$. Hence, the original subset $\mathcal{R}_1$ is not modified, and the RT-inconsistency is corrected by finding new timed requirements which, when added to the subset $\mathcal{R}_1$, enable to obtain a set $\mathcal{R}$ that is RT-consistent.

In other embodiments, the set $\mathcal{R}$ may be the original set of timed requirements constraining the operation of the target computer system, for which a RT-inconsistency is detected. In such a case, one or more timed requirements of the set $\mathcal{R}$, which compose the second subset $\mathcal{R}_2$, are modified in order to obtain a set that is RT-consistent. In preferred embodiments, the second subset $\mathcal{R}_2$ may be modified such that a distance between any modified second subset $\mathcal{R}'_2$ and the original second subset $\mathcal{R}_2$ does not exceed a predetermined maximum distance $d_m$ i.e. $d(\mathcal{R}_2, \mathcal{R}'_2) \leq d_m$. This embodiment is advantageous in that it prevents from modifying too significantly the set $\mathcal{R}$.

Also, it should be noted that it is possible to combine both approaches, i.e. by both modifying some of the original timed requirements constraining the operation of the target computer system and adding new timed requirements. In such a case, the second subset $\mathcal{R}_2$, to be modified, comprises both timed requirements of the original set and new timed requirements.

In the sequel, we assume in a non-limitative manner, the case of SUP timed requirements. Hence, the set $\mathcal{R}$ may be defined as:

$$\mathcal{R} = \left( SUP\left(P^i\right) \right)_{1 \leq i \leq n}$$

wherein $n$ is the number of timed requirements. Also, we assume that the set $\mathcal{R}$ is updated by modifying only a predetermined subset $M$ of parameters of the set $\mathcal{R}$, $M \subseteq \left\{ P_F^i \mid F \in \mathcal{F} \right\}$. In such a case, $\mathcal{R}_1 \subseteq \mathcal{R}$ can be the subset of requirements without any parameter in M, and $\mathcal{R}_2 = \mathcal{R} \backslash \mathcal{R}_1$

As discussed above, the original set may correspond to e.g. the first subset $\mathcal{R}_1$ (in which case RT-inconsistency is solved by adding one or more new timed requirements) or the set $\mathcal{R}$ (in which case RT-inconsistency may be solved by modifying some of the timed requirements of the set $\mathcal{R}$).

If the original set corresponds to the first subset $\mathcal{R}_1$, then each new timed requirement may be initialized as a timed requirement trivial which denotes the SUP timed requirement that is trivially satisfied in which all Boolean parameters are $\top$ and all time parameters are 0. In such a case, the subset $M$ of parameters may be chosen to comprise all the parameters of each added timed requirement trivial.

If the original set corresponds to the set $\mathcal{R}$, the subset $M$ of parameters may be e.g. chosen arbitrarily. Preferably, the subset $M$ of parameters is chosen based on the witness trace used to initialize the set

$$ \mathcal{C}_{\Sigma'} $$

of constraints. For instance, the subset $M$ of parameters comprises all the parameters $P_F^i$ that are involved in the proof of the RT-inconsistency of the set $\mathcal{R}$.

As illustrated by figure 3, the correcting method 30 then comprises the following steps, which are iterated:

- a step S32 of modifying the second subset $\mathcal{R}_2$ of timed requirements to obtain an updated set of timed requirements for which each constraint in the set

$$ \mathcal{C}_{\Sigma} $$

of constraints is satisfied;
- a step S33 of searching for a further witness trace of the RT-inconsistency of the updated set of timed requirements;
- when a further witness trace is found (reference S33b in figure 3): a step S34 of augmenting the set

$$ \mathcal{C}_{\Sigma} $$

of constraints based on said further witness trace.

Hence, the second subset $\mathcal{R}_2$ is iteratively modified to produce an updated set $\mathcal{R}' = \mathcal{R}_1 \cup \mathcal{R}'_2$ ($\mathcal{R}'_2$ corresponding to the subset obtained by modifying the subset $\mathcal{R}_2$) at each iteration. It should be noted that, if it is not possible to satisfy all the constraints in the set

$$ \mathcal{C}_{\Sigma} $$

(case not considered in figure 3), then the set $\mathcal{R}$ cannot be completely corrected. If an updated set $\mathcal{R}'$ is found that is both RT-consistent (i.e. no further witness trace found, reference S33a in figure 3) and that satisfies all the constraints in the set

$$\mathcal{C}_{\Sigma}$$

of constraints, then the correcting method 30 returns the updated set $\mathcal{R}'$ which is used to constrain and validate the operation of the target computer.

As discussed above, the set

$$\mathcal{C}_{\Sigma}$$

of constraints is initialized and augmented based on (further) witness traces of the RT-inconsistency. The initializing S31 and augmenting S34 steps are similar, the main difference being that the set

$$\mathcal{C}_{\Sigma}$$

is empty before the initializing step S31. Basically, for each new (further) witness trace $\sigma$ of the RT-inconsistency, a new constraint $\phi$ is added to the set

$$\mathcal{C}_{\Sigma}$$

of constraints. The added constraint $\phi$ may depend on whether the witness trace demonstrates the RT-inconsistency of the first subset $\mathcal{R}_1$ (i.e. without considering the timed requirements of the second subset $\mathcal{R}_2$ or of the modified second subset $\mathcal{R}'_2$) or not (the RT-inconsistency requires to take into account all the timed requirements of the set $\mathcal{R}$ or of the updated set $\mathcal{R}'$). In the first case (RT-inconsistency of the first subset $\mathcal{R}_1$), since the timed requirements of the first subset $\mathcal{R}_1$ are not modified, the added constraint $\phi$ may require that the modified second subset $\mathcal{R}'_2$ of subsequent iterations prevents said (further) witness trace $\sigma$ to occur. In the second case (first subset $\mathcal{R}_1$ alone not RT-inconsistent), then the added constraint $\phi$ may require that:

- either the modified second subset $\mathcal{R}'_2$ of subsequent iterations prevents said further witness trace $\sigma$ to occur;
- or said further witness trace $\sigma$ is not a witness trace of the RT-inconsistency of the updated set $\mathcal{R}'$ of subsequent iterations.

It should be noted that other issues of the set $\mathcal{R}$ may be corrected, in addition to or instead of the (RT-)inconsistency. For instance, the set $\mathcal{R}$ may be initially vacuous, and the correcting method 30 may be used to try and correct this vacuity by modifying the second subset $\mathcal{R}_2$.

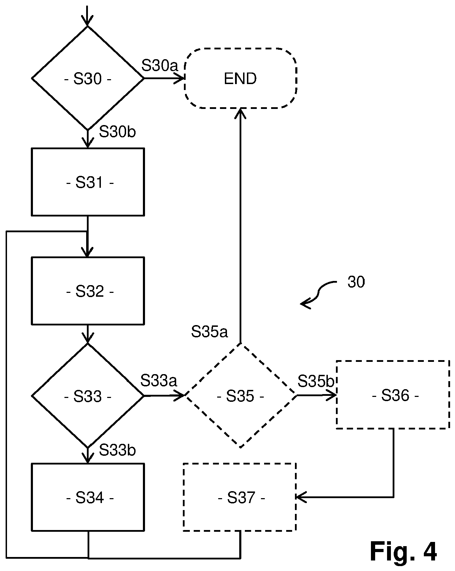

Figure 4 represents the main steps of a preferred embodiment of the correcting method 30, in which an initial RT-inconsistency is to be corrected while simultaneously ensuring that the updated set $\mathcal{R}$ ' is not vacuous.

As illustrated by figure 4, the correcting method 30 comprises, in addition to the steps discussed in reference to figure 3, the following steps which are also iterated:

- a step S35 of searching for a timed requirement in the first subset $\mathcal{R}_1$, referred to as vacuous timed requirement, which cannot be triggered when considering the updated set $\mathcal{R}$ ';
- when a vacuous timed requirement is found (reference S35b in figure 4): a step S36 of determining an execution sequence, referred to as triggering trace, which triggers the vacuous timed requirement when considering the first subset $\mathcal{R}_1$, and a step S37 of augmenting the set

$$\mathcal{C}_\Sigma$$

of constraints based on said triggering trace.

Hence, the second subset $\mathcal{R}_2$ is similarly iteratively modified to produce an updated set $\mathcal{R}$' at each iteration. However, it is further checked that no timed requirement of the first subset $\mathcal{R}_1$ becomes vacuous (i.e. cannot be triggered) when considering the updated set $\mathcal{R}$'. If one timed requirement of the first subset $\mathcal{R}_1$ becomes vacuous, a triggering trace is found (which triggers said vacuous timed requirement when considering only the timed requirements of the first subset $\mathcal{R}_1$ ), and a new constraint $\phi$ is added to the set

$$\mathcal{C}_\Sigma$$

of constraints for future iterations.

It should be noted that, if the first subset $\mathcal{R}_1$ itself is vacuous, then it is not possible to correct the set $\mathcal{R}$ without modifying the timed requirements of the first subset $\mathcal{R}_1$ . In such a case, the execution of the correcting method 30 may stop. The partition of the timed requirements between the first and second subsets $\mathcal{R}_1$ and $\mathcal{R}_2$ may be modified to ensure the non-vacuity of the first subset $\mathcal{R}_1$ , which comprises the timed requirements that are not to be modified.

If it is not possible to satisfy all the constraints in the set

$$\mathcal{C}_\Sigma$$

(case not considered in figure 4), then the set $\mathcal{R}$ cannot be completely corrected. If an updated set $\mathcal{R}$' is found that is RT-consistent (i.e. no further witness trace found, reference S33a in figure 3), non-vacuous (reference S35a in figure 4) and that satisfies all the constraints in the set

$$\mathcal{C}_\Sigma$$

of constraints, then the correcting method 30 returns the updated set $\mathcal{R}$' which is used to constrain and validate the operation of the target computer.

The set

$$\mathcal{C}_\Sigma$$

of constraints may be further augmented based on any such triggering trace found for a vacuous timed requirement of the first subset $\mathcal{R}_1$ . Basically, for each new triggering trace $\sigma$, a new constraint $\phi$ is added to the set

$$\mathcal{C}_\Sigma$$

of constraints. Basically, the added constraint $\phi$ requires that the modified second subset $\mathcal{R}'_2$ of subsequent iterations does not prevent said triggering trace $\sigma$ to occur. Such a constraint $\phi$ ensures that the timed requirement associated to the triggering trace $\sigma$ is no longer vacuous in the updated set $\mathcal{R}$' of subsequent iterations.

In preferred embodiments, the second subset $\mathcal{R}_2$ of timed requirements is modified to obtain an updated set $\mathcal{R}$' of timed requirements for which each constraint in the set of constraints is satisfied and for which all timed requirements in the modified second subset $\mathcal{R}'_2$ can be triggered when considering the updated set $\mathcal{R}$' of timed requirements. This ensures that, if a timed requirement of the updated set $\mathcal{R}$' is vacuous, then it is necessarily a timed requirement of the subset $\mathcal{R}_1$ .

Also, in preferred embodiments, searching for a witness trace and/or a triggering trace and/or determining a modified second subset $\mathcal{R}'_2$ such that the updated set $\mathcal{R}$' satisfies the set

$$\mathcal{C}_\Sigma$$

of constraints uses a Satisfiability Modulo Theories, SMT, solver. Indeed, such SMT solvers are efficient in finding variable assignments satisfying given constraints. They prove very efficient in bounded model checking, which consists in checking traces of bounded length, and thus for searching for witness and/or triggering traces of bounded length.

## C. Detailed embodiments of the correcting method

In the sequel, we describe specific preferred embodiments of correcting method 30. It is emphasized that the present invention is not limited to the below exemplary embodiments. Variants of these embodiments are also within the scope of the present invention.

In the present embodiments, we consider in a non-limitative manner that the set $\mathcal{R}$ corresponds to SUP timed requirements, and that a subset $M$ of parameters can be modified to correct the set $\mathcal{R}$ . Also, the set $\mathcal{R}$ is modified to further ensure that $d(\mathcal{R}, \mathcal{R}') = d(\mathcal{R}_2, \mathcal{R}'_2)$ is minimized. In other words, the goal is to correct the set $\mathcal{R}$ with minimal modifications in the allowed subset $M$. Also, we assume in the sequel, in a non-limitative the manner, that the correcting method 30 uses SMT solvers and that the traces considered (e.g. witness and/or triggering traces) are generalized traces.

Although the set $\mathcal{R}$ may use arbitrary Boolean parameters, we assume in a non-limitative manner that the parameters of the subset $M$ are conjunctive formulas. Hence, we thus assume that each Boolean parameter $F \in M \cap \mathcal{F}_b$ is a conjunctive formula and thus has the form $F = \wedge_{x \in AP} F_x$ where $F_x$ is a literal. For instance, each $F_x$ can have three values representing $x, \neg x$ or true. The modification of the subset $M$ is therefore performed by selecting one of the three values for each literal $F_x$ for $x \in$ AP, as well as values for the timing parameters in $M \cap \mathcal{F}_t$ . Hence, the parameter F may be expressed as:

$$F \equiv \bigwedge_{x \in AP \text{ s.t. } F_x = \top} x \wedge \bigwedge_{x \in AP \text{ s.t. } F_x = \bot} \neg x$$

We denote by $\mathcal{R}(M)$ the set of requirements obtained from $\mathcal{R}$ by replacing each parameter in M by conjunctive formulas where each literal is a fresh free variable as described above. A model for $\mathcal{R}(M)$ defines a new set of timed requirements obtained from $\mathcal{R}$ by modifying parameters in the subset $M$.

If a given set of requirements is RT-inconsistent, then the SMT solver may return a generalized witness trace. This means that all concretizations of the returned generalized witness trace are witness traces to RT-inconsistency. Hence, when e.g. modifying the timed requirements in order to prevent a generalized witness to occur, this implies that all the concretizations of such a generalized witness trace are to be excluded. Handling generalized traces is advantageous in that the correcting method 30 learns the new constraints with less iterations.

Observe that if at each step $i$, $\sigma_i$ defines a concrete valuation, then there is a unique execution on any complete deterministic timed automaton (CDTA). But for a non-concrete execution, there are several corresponding executions in general. It is possible to write a formula, by using e.g. universal quantifiers, that constrains all concrete executions of $\sigma$ to enter a given set of states in a given timed automaton.

Based on the above, given a set $\mathcal{R}$ of timed requirements, and $R$ another timed requirement, we may define:

- trig$_\sigma$($R(M)$) = ($\Phi_\sigma$($R(M)$,trig), which corresponds to the formula describing that all concretizations of the generalized trace $\sigma$ trigger the timed requirement $R$;

- $\mathrm{rej}_\sigma\big(\mathcal{R}(M)\big) = \Phi_\sigma(\mathcal{R}(M), \mathrm{err})$, which corresponds to the formula describing that all concretizations of the generalized trace $\sigma$ lead to the error states when considering the set $\mathcal{R}(M)$;

- $\mathrm{acc}_\sigma\big(\mathcal{R}(M)\big) = \Phi_\sigma(\mathcal{R}(M), Q \backslash \{\mathrm{err}\})$, which corresponds to the formula describing that all concretizations of the generalized trace $\sigma$ lead to the accepting states when considering the set $\mathcal{R}(M)$; we will also denote $\sigma \models \mathcal{R}$ by $\mathrm{acc}_\sigma(\mathcal{R})$;

- $\mathrm{ext}_\sigma\big(\mathcal{R}(M)\big) = \mathrm{acc}_{\sigma a}\big(\mathcal{R}(M)\big)$, where $a$ stands for free variables encoding a one-step extension of $\sigma$.

The non-vacuity checking for a timed requirement $R \in \mathcal{R}$ may be performed by a bounded search for a trace that triggers $R$ without violating $\mathcal{R}$. Non-vacuity checking may be performed in different ways, and we present below two different examples of checking non-vacuity.

According to a first example, non-vacuity checking searches for a finite trace triggering $R$ without violating $\mathcal{R}$. For a given set of timed requirements $\mathcal{R}$, $R \in \mathcal{R}$, and a bound $a > 0$, we define nonvac $(R, \mathcal{R})$ as:

$$\exists\, 1 \leq i \leq \alpha\,.\,\exists \sigma \in \mathrm{AP}^\alpha\,.\,\mathrm{trig}_{\sigma_1 \ldots \sigma_i}(R) \wedge \sigma \models \mathcal{R}$$

Thus, the above non-vacuity formula checks the existence of a trace $\sigma$ of size at most $\alpha$, satisfying $\mathcal{R}$ and such that some prefix triggers $R$. Note that this is a partial non-vacuity check since the bound $\alpha$ needs to be fixed. Moreover, even if $\sigma \models \mathcal{R}$, it is possible that no infinite extension of $\sigma$ satisfies R. However, this is independently handled by RT-consistency checking.

According to a second example, non-vacuity checking may check whether a timed requirement $R$ can be triggered infinitely often. For a given set of timed requirements $\mathcal{R}$, $R \in \mathcal{R}$, and $\alpha > 0$, let $\mathcal{A}$ denote a CDTA corresponding to $\mathcal{R}$. Define $\mathrm{nonvac}_\infty(R, \mathcal{R})$ as:

$$\exists\, 1 \leq k < l \leq \alpha\,.\,\exists \sigma \in \mathrm{AP}^l\,.\,\mathrm{trig}_{\sigma_1 \ldots \sigma_k}(R) \wedge \sigma \models \mathcal{R} \wedge \bigvee_{q \in \mathcal{Q}_\mathcal{A}} \Phi_{\sigma_1 \ldots \sigma_k}(\mathcal{A}, q) \wedge \Phi_\sigma(\mathcal{A}, q)$$

Hence, the non-vacuity formula $\mathrm{nonvac}_\infty(R, \mathcal{R})$ is true when there is a lasso-shaped execution satisfying $\mathcal{R}$ and triggering $R$ infinitely often.

Both non-vacuity formulas can be used depending on the context. It might be that some timed requirements are meant to be triggered only a finite number of times along an execution (e.g. for the initialization phase of the target computer system), while some others might be naturally required to be triggered infinitely often. Checking $\mathrm{nonvac}_\infty$ is computationally more expensive in general for large sets of timed requirements since large bounds $\alpha$ need to be considered in order to find cycles in the joint state space (that is, in $\mathcal{A}$).

In the present embodiments, we are going to consider finite traces that trigger a given timed requirement $R$. Such traces, referred to as "triggering traces", demonstrate the non-vacuity of the set of timed requirements. Such a triggering trace is easy to compute since the satisfiability of nonvac is witnessed by such a triggering trace. If we use SMT solvers for non-vacuity checking, such triggering traces can be obtained directly.

Based on the above, we consider that the first subset $\mathcal{R}_1 \subseteq \mathcal{R}$ contains the timed requirements without any parameter in *M,* and the second subset $\mathcal{R}_2$

is defined as $\mathcal{R}_2 = \mathcal{R} \backslash \mathcal{R}_1$. Let $\mathcal{R}_2(M)$ denote the subset of SUP requirements in which the parameters in *M* are replaced with conjunctive formulas with a fresh free variable for each literal. Hence, the goal is to compute values for M and instantiate $\mathcal{R}_2(M)$ as $\mathcal{R}'_2$, which modifies and replaces the second subset $\mathcal{R}_2$. $\mathcal{R}' = \mathcal{R}_1 \cup \mathcal{R}'_2$ corresponds to the updated set of timed requirements.

Assume that the set $\mathcal{R}$ is RT-inconsistent and consider an RT-inconsistency witness trace $\sigma$. Then, as discussed above, two different situations may be considered:

- if $\sigma$ is an RT-inconsistency witness trace in $\mathcal{R}_1$, then, we need $\mathcal{R}'_2$ to reject $\sigma$ (i.e. to prevent $\sigma$ from occurring), which may be encoded with $\text{rej}_\sigma\big(\mathcal{R}_2(M)\big)$;

- if $\sigma$ is not an RT-inconsistency witness trace in $\mathcal{R}_1$, then $\mathcal{R}'_2$ must be such that $\sigma$ is rejected or that it admits some extension that satisfies $\mathcal{R}_1 \cup \mathcal{R}'_2$, which may be encoded with $\text{rej}_\sigma\big(\mathcal{R}_2(M)\big) \vee \text{ext}_\sigma\big(\mathcal{R}_1 \cup \mathcal{R}_2(M)\big)$.

For any propositional formula $\Phi$, we denote by SAT($\Phi$) the satisfiability check which returns true or false.
An exemplary pseudo-code implementation for an exemplary embodiment is given below.

**Input**: set $\mathcal{R}$ of *SUP* requirements that is vacuous or RT-inconsistent

      subset $M$ of parameters to be modified

      $\mathcal{R}_1 \subseteq \mathcal{R}$ the subset that does not contain parameters of the subset $M$

      $\mathcal{R}_2 = \mathcal{R} \backslash \mathcal{R}_1$

**if** $\mathcal{R}$ is RT-inconsistent **then**

      Let $\sigma$ be a generalized witness trace

      **if** $\sigma$ is a RT-inconsistency witness for $\mathcal{R}_1$ **then**

            $\mathcal{C}_\Sigma = \left\{\mathrm{rej}_\sigma\big(\mathcal{R}_2(M)\big)\right\}$

      **else**

            $\mathcal{C}_\Sigma = \left\{\mathrm{rej}_\sigma\big(\mathcal{R}_2(M)\big) \vee \mathrm{ext}_\sigma\big(\mathcal{R}_1 \cup \mathcal{R}_2(M)\big)\right\}$

      **end**

**else**

      $\mathcal{C}_\Sigma = \emptyset$

**end**

**while** $\mathrm{SAT}\left(\bigwedge_{\phi(M) \in \mathcal{C}_\Sigma} \phi(M) \wedge \bigwedge_{R \in \mathcal{R}_2} \mathrm{nonvac}\big(R(M), \mathcal{R}_1 \cup \mathcal{R}_2(M)\big)\right)$ **do**

      Compute a minimal model $M_0$, and let $\mathcal{R}'_2 = \mathcal{R}_2(M_0)$

      **if** $\mathcal{R}_1 \cup \mathcal{R}'_2$ is vacuous **then**

            Determine $R \in \mathcal{R}_1$ which cannot be triggered

            **if** $\mathrm{SAT}\big(\mathrm{nonvac}(R, \mathcal{R}_1)\big)$ **then** // $\mathcal{R}_1$ alone is not vacuous

                  Let $\sigma$ be a triggering trace satifying $\mathcal{R}_1$

                  $\mathcal{C}_\Sigma \leftarrow \mathcal{C}_\Sigma \cup \left\{\mathrm{acc}_\sigma\big(\mathcal{R}_2(M)\big)\right\}$

            **else**

Reject // This vacuity cannot be resolved

**end**

**else if** $\mathcal{R}_1 \cup \mathcal{R}'_2$ is RT-inconsistent **then**

Let $\sigma$ be a generalized witness trace

**if** $\sigma$ is a RT-inconsistency witness for $\mathcal{R}_1$ **then**

$$\mathcal{C}_\Sigma \leftarrow \mathcal{C}_\Sigma \cup \left\{ \mathrm{rej}_\sigma \big( \mathcal{R}_2(M) \big) \right\}$$

**else**

$$\mathcal{C}_\Sigma \leftarrow \mathcal{C}_\Sigma \cup \left\{ \mathrm{rej}_\sigma \big( \mathcal{R}_2(M) \big) \vee \mathrm{ext}_\sigma \big( \mathcal{R}_1 \cup \mathcal{R}_2(M) \big) \right\}$$

**end**

**else**

**return** $\mathcal{R}_1 \cup \mathcal{R}'_2$ // $\mathcal{R}_1 \cup \mathcal{R}'_2$ is the corrected set of requirements

**end**

**end**

At each iteration, it is checked whether values can be assigned to $M$ such that the resulting new timed requirement set $\mathcal{R}_1 \cup \mathcal{R}_2(M)$ satisfies all constraints in

$$\mathcal{C}_\Sigma$$

and such that the timed requirements in $\mathcal{R}_2(M)$ can all be triggered. If such a model exists, then we consider the updated set $\mathcal{R}_1 \cup \mathcal{R}'_2$ .

In the above pseudo-code, we compute a minimal model $M_0$ for the subset $M$, i.e. a model that minimizes the distance between the updated and original timed requirements. Since all parameters in $M$ are in conjunctive form in the set $\mathcal{R}$, we can easily express the distance between the new and original timed requirements. For $F \in M$, let $F_x$ denote the value for the literal $x$ in $F$ in the subset $\mathcal{R}_2$, while $F'_x$ denotes its new value in the subset $\mathcal{R}'_2$. Given a bound $d_m$, the following constraints bounds the distance of $d(\mathcal{R}_2, \mathcal{R}'_2)$ by $d_m$:

$$\sum_{F \in M} \sum_{x \in \mathrm{AP}} (\text{if } F_x \neq F'_x \text{ then } 1 \text{ else } 0) \leq d_m$$

To compute a minimal model $M_0$ for $M$, we can run a binary search on the bound $d_m$. Using an incremental solver may render the successive calls more efficient, since between two calls, only the constraint on the upper bound changes.

If the updated set is vacuous, then a vacuous timed requirement $R$ is determined. The set

$$\mathcal{C}_\Sigma$$

of constraints is augmented based on whether or not the timed requirement R is also vacuous within $\mathcal{R}_1$ . If the subset $\mathcal{R}_1$ is vacuous, this vacuity cannot be resolved. If the subset $\mathcal{R}_1$ is not vacuous, then we determine a triggering trace $\sigma$ that triggers R while satisfying $\mathcal{R}_1$ , and we may add $\mathrm{acc}_\sigma\bigl(\mathcal{R}_2(M)\bigr)$ to the set

$$\mathcal{C}_\Sigma$$

of constraints

If the updated set is non-vacuous, then we check the RT-consistency of $\mathcal{R}_1 \cup \mathcal{R}'_2$ . If it is RT-consistent, then we return this updated set $\mathcal{R}' = \mathcal{R}_1 \cup \mathcal{R}'_2$ . Otherwise, we consider a witness trace $\sigma$ to the RT-inconsistency. The set

$$\mathcal{C}_\Sigma$$

of constraints is augmented based on whether the witness trace $\sigma$ demonstrates the RT-inconsistency of $\mathcal{R}_1$ , in which case we add the constraint $\mathrm{rej}_\sigma\bigl(\mathcal{R}_2(M)\bigr)$ to the set

$$\mathcal{C}_\Sigma$$

of constraints. Otherwise, we add $\mathrm{rej}_\sigma\bigl(\mathcal{R}_2(M)\bigr) \vee \mathrm{ext}_\sigma\bigl(\mathcal{R}_1 \cup \mathcal{R}_2(M)\bigr)$ to the set

$$\mathcal{C}_\Sigma$$

of constraints.

It should be noted that, in some cases, the new timed requirements fixing the RT-inconsistency might be unsatisfactory if they excessively restrict the set of possible execution sequences that satisfy the updated set $\mathcal{R}$ '. In this case, it is possible to further augment the set

$$\mathcal{C}_\Sigma$$

of constraints to ensure that additional execution sequences, referred to as "desired traces" are not prevented from occurring when modifying the second subset $\mathcal{R}_2$ . If $\mathcal{R}_1 \cup \mathcal{R}'_2$ is a set of timed requirements which is non-vacuous and RT-consistent, then it is possible to search for a desired trace $\sigma$ (of given size k), e.g. using a SMT solver, such that $\sigma \models \mathcal{R}$ (here the original set $\mathcal{R} = \mathcal{R}_1 \cup \mathcal{R}_2$ ) but $\sigma \not\models \mathcal{R}_1 \cup \mathcal{R}'_2$ . We may then add $\mathrm{acc}_\sigma\bigl(\mathcal{R}_2(M)\bigr)$ to the set

$$\mathcal{C}_\Sigma$$

of constraints and continue iterating. It is possible to continue until a satisfactory solution is found (e.g. the set of possible execution sequences is not excessively restricted), or until no such further desired trace $\sigma$ exists or no M satisfying the set

$$\mathcal{C}_\Sigma$$

of constraints exists. Each successful termination of the correcting method 30 yields a non-vacuous and RT-consistent updated set, so a user can choose one of these.

In the above pseudocode one can pick one concretization $\sigma'$ of the generalized witness trace $\sigma$ and using $\mathrm{rej}_{\sigma'}\big(\mathcal{R}_2(M)\big)$. This yields a small SMT query which can be solved faster but requires a possibly large number of iterations since only a small piece of information is learned at each iteration.

Another approach would consist in using universal quantifiers to define a formula that rejects all concretizations of the generalized witness trace $\sigma$. For a partial valuation v, let $\sigma[v]$ denote the trace obtained by replacing each x by v(x) when v(x) is defined. The formula $\forall\,\mathrm{DontCare}(\sigma)\,.\,\mathrm{rej}_{\sigma[\mathrm{DontCare}(\sigma)]}\big(\mathcal{R}_2(M)\big)$ then rejects all concretizations of the generalized witness trace $\sigma$. Using universal quantifiers means that each query of the SMT solver is slower, although all concretizations are addressed.

**References**

[AD90] Rajeev Alur and David L. Dill. "Automata for modeling real-time systems". In Mike Paterson, editor, Proceedings of the 17th International Colloquium on Automata, Languages and Programming (ICALP'90), volume 443 of LNCS, pages 322-335. Springer, 1990.

[Bec19] Jan Steffen Becker. "Analyzing consistency of formal requirements". In Proceedings of the 18th International Workshop on Automated Verification of Critical Systems (AVOCS'18). EASST, 2019.

[PHP11] Amalinda Post, Jochen Hoenicke, and Andreas Podelski. "RT-inconsistency: a new property for real-time requirements". In Proceedings of the 14th International Conference on Fundamental Approaches to Software Engineering (FASE'11), volume 6603 of LNCS. Springer, 2011.

**Claims**

**1.** A computer implemented method (30) for correcting the operation of a target computer system, said operation of the target computer system being constrained by a set of timed requirements, wherein a timed requirement corresponds to constraints, including timing constraints, between outputs of the target computer system and inputs to said target computer system, wherein an execution sequence of the target computer system, referred to as witness trace, satisfies a criterion for detecting a conflict between timed requirements of the set of timed requirements, referred to as inconsistency, wherein the set of timed requirements comprises a first subset and a second subset of timed requirements,
**characterized in that**

said method (30) comprises (S31) initializing a set of constraints based on said witness trace, and iterating steps of:

- (S32) modifying the second subset of timed requirements to obtain an updated set of timed requirements for which each constraint in the set of constraints is satisfied;
- (S33) searching for a further witness trace of the inconsistency of the updated set of timed requirements;
- when a further witness trace is found: (S34) augmenting the set of constraints based on said further witness trace;

wherein the operation of the target computer system is considered corrected when no further witness trace is found for an updated set of timed requirements.

**2.** Method (30) according to claim 1, comprising iterating steps of

- (S35) searching for a timed requirement in the first subset, referred to as vacuous timed requirement, which cannot be triggered when considering the updated set of timed requirements;

- when a vacuous timed requirement is found: (S36) determining an execution sequence, referred to as triggering trace, which triggers the vacuous timed requirement when considering the first subset of timed requirements, and (S37) augmenting the set of constraints based on said triggering trace;

wherein the operation of the target computer system is considered corrected when no further witness trace and no vacuous timed requirement is found for an updated set of timed requirements.

3. Method (30) according to claim 2, wherein (S37) augmenting the set of constraints based on a triggering trace comprises adding a constraint requiring that the modified second subset of timed requirements of subsequent iterations does not prevent said triggering trace to occur.

4. Method (30) according to any one of the preceding claims, wherein (S34) augmenting the set of constraints based on a further witness trace of the inconsistency of the first subset of timed requirements comprises adding a constraint requiring that the modified second subset of timed requirements of subsequent iterations prevents said further witness trace to occur.

5. Method (30) according to any one of the preceding claims, wherein (S34) augmenting the set of constraints based on a further witness trace of the inconsistency of the updated set of timed requirements which is not a witness trace of the inconsistency of the first subset of timed requirements comprises adding a constraint requiring that:

   - either the modified second subset of timed requirements of subsequent iterations prevents said further witness trace to occur;
   - or said further witness trace is not a witness trace of the inconsistency of the updated set of timed requirements of subsequent iterations.

6. Method (30) according to any one of the preceding claims, wherein the operation of a target computer system is initially constrained by the first subset of timed requirements and correcting the operation of the target computer system comprises adding the second subset of timed requirements to the first subset of timed requirements.

7. Method (30) according to any one of claims 1 to 5, comprising determining a subset of parameters of the set of timed requirements based on the witness trace, and determining the first and the second subset based on the subset of parameters, wherein the second subset is modified by modifying only parameters in said subset of parameters.

8. Method (30) according to claim 7, wherein the second subset is modified such that a distance between any modified second subset and the initial second subset does not exceed a predetermined maximum distance.

9. Method (30) according to any one of the preceding claims, wherein the second subset of timed requirements is modified to obtain an updated set of timed requirements for which each constraint in the set of constraints is satisfied and for which all timed requirements in the modified second subset can be triggered when considering the updated set of timed requirements.

10. Method (30) according to any one of the preceding claims, comprising augmenting the set of constraints based on a desired trace that can occur when considering the original set of timed requirements but is prevented from occurring by an updated set of timed requirements.

11. Method (30) according to any one of the preceding claims, wherein, searching for a witness trace and/or a triggering trace uses a Satisfiability Modulo Theories, SMT, solver.

12. Method (50) according to any one of the preceding claims, wherein each timed requirement is modeled as a Simplified Universal Pattern, SUP.

13. Computer program product comprising instructions which, when executed by at least one processor, configure said at least one processor to carry out a correcting method (30) according to any one of the preceding claims.

14. Computer-readable storage medium comprising instructions which, when executed by at least one processor, configure said at least one processor to carry out a correcting method (30) according to any one of claims 1 to 12.

15. Correcting computer system for correcting the operation of a target computer system, said correcting computer system comprising at least one processor configured to carry out a correcting method (50) according to any one of claims 1 to 12.

**Patentansprüche**

1. Computerimplementiertes Verfahren (30) zum Korrigieren des Betriebs eines Zielcomputersystems, wobei der Betrieb des Zielcomputersystems durch einen Satz zeitlich festgelegter Anforderungen beschränkt ist, wobei eine zeitlich festgelegte Anforderung Beschränkungen, einschließlich Timing-Beschränkungen, zwischen Ausgaben des Zielcomputersystems und Eingaben an das Zielcomputersystem entspricht, wobei eine Ausführungssequenz des Zielcomputersystems, welche als eine Nachweisspur bezeichnet wird, ein Kriterium zum Detektieren eines Konflikts zwischen zeitlich festgelegten Anforderungen des Satzes zeitlich festgelegter Anforderungen erfüllt, welcher als Inkonsistenz bezeichnet wird, wobei der Satz zeitlich festgelegter Anforderungen einen ersten Untersatz und einen zweiten Untersatz zeitlich festgelegter Anforderungen umfasst,
   **dadurch gekennzeichnet, dass**

   das Verfahren (30) (S31) ein Initialisieren eines Satzes von Beschränkungen auf Grundlage der Nachweisspur und ein Iterieren der folgenden Schritte umfasst:

   - (S32) Modifizieren des zweiten Untersatzes zeitlich festgelegter Anforderungen, um einen aktualisierten Satz zeitlich festgelegter Anforderungen zu erhalten, für welchen jede Beschränkung in dem Satz von Beschränkungen erfüllt ist;
   - (S33) Suchen nach einer weiteren Nachweisspur der Inkonsistenz des aktualisierten Satzes zeitlich festgelegter Anforderungen;
   - wenn eine weitere Nachweisspur gefunden wird: (S34) Erweitern des Satzes von Beschränkungen auf Grundlage der weiteren Nachweisspur;

   wobei der Betrieb des Zielcomputersystems als korrigiert betrachtet wird, wenn für einen aktualisierten Satz zeitlich festgelegter Anforderungen keine weitere Nachweisspur gefunden wird.

2. Verfahren (30) nach Anspruch 1, umfassend ein Iterieren der folgenden Schritte:

   - (S35) Suchen nach einer zeitlich festgelegten Anforderung in dem ersten Untersatz, welche als eine leere zeitlich festgelegte Anforderung bezeichnet wird, welche nicht getriggert werden kann, wenn der aktualisierte Satz zeitlich festgelegter Anforderungen betrachtet wird;
   - wenn eine leere zeitlich festgelegte Anforderung gefunden wird: (S36) Bestimmen einer Ausführungssequenz, welche als eine Triggerspur bezeichnet wird, welche die leere zeitlich festgelegte Anforderung triggert, wenn der erste Untersatz zeitlich festgelegter Anforderungen betrachtet wird, und (S37) Erweitern des Satzes von Beschränkungen auf Grundlage der Triggerspur;

   wobei der Betrieb des Zielcomputersystems als korrigiert betrachtet wird, wenn keine weitere Nachweisspur und keine weitere leere zeitlich festgelegte Anforderung für einen aktualisierten Satz zeitlich festgelegter Anforderungen gefunden wird.

3. Verfahren (30) nach Anspruch 2, wobei (S37) das Erweitern des Satzes von Beschränkungen auf Grundlage einer Triggerspur ein Ergänzen einer Beschränkung umfasst, welche erfordert, dass der modifizierte zweite Untersatz zeitlich festgelegter Anforderungen aufeinanderfolgender Iterationen nicht verhindert, dass die Triggerspur auftritt.

4. Verfahren (30) nach einem der vorhergehenden Ansprüche, wobei (S34) das Erweitern des Satzes von Beschränkungen auf Grundlage einer weiteren Nachweisspur der Inkonsistenz des ersten Untersatzes zeitlich festgelegter Anforderungen ein Ergänzen einer Beschränkung umfasst, welche erfordert, dass der modifizierte zweite Untersatz zeitlich festgelegter Anforderungen aufeinanderfolgender Iterationen verhindert, dass die weitere Nachweisspur auftritt.

5. Verfahren (30) nach einem der vorhergehenden Ansprüche, wobei (S34) das Erweitern des Satzes von Beschränkungen auf Grundlage einer weiteren Nachweisspur der Inkonsistenz des aktualisierten Satzes zeitlich festgelegter Anforderungen, welche keine Nachweisspur der Inkonsistenz des ersten Untersatzes zeitlich festgelegter Anforderungen ist, ein Ergänzen einer Beschränkung umfasst, welche erfordert, dass:

- entweder der modifizierte zweite Untersatz zeitlich festgelegter Anforderungen aufeinanderfolgender Iterationen verhindert, dass die weitere Nachweisspur auftritt;
- oder die weitere Nachweisspur keine Nachweisspur der Inkonsistenz des aktualisierten Satzes zeitlich festgelegter Anforderungen aufeinanderfolgender Iterationen ist.

6. Verfahren (30) nach einem der vorhergehenden Ansprüche, wobei der Betrieb eines Zielcomputersystems initial durch den ersten Untersatz zeitlich festgelegter Anforderungen beschränkt wird und das Korrigieren des Betriebs des Zielcomputersystems ein Ergänzen des zweiten Untersatzes zeitlich festgelegter Anforderungen zu dem ersten Untersatz zeitlich festgelegter Anforderungen umfasst.

7. Verfahren (30) nach einem der Ansprüche 1 bis 5, umfassend Bestimmen eines Untersatzes von Parametern des Satzes zeitlich festgelegter Anforderungen auf Grundlage der Nachweisspur, und Bestimmen des ersten und des zweiten Untersatzes auf Grundlage des Untersatzes von Parametern, wobei der zweite Untersatz durch Modifizieren nur von Parametern in dem Untersatz von Parametern modifiziert wird.

8. Verfahren (30) nach Anspruch 7, wobei der zweite Untersatz so modifiziert wird, dass eine Distanz zwischen jeglichem modifizierten zweiten Untersatz und dem initialen zweiten Untersatz eine vorbestimmte maximale Distanz nicht überschreitet.

9. Verfahren (30) nach einem der vorhergehenden Ansprüche, wobei der zweite Untersatz zeitlich festgelegter Anforderungen modifiziert wird, um einen aktualisierten Satz zeitlich festgelegter Anforderungen zu erhalten, für welchen jede Beschränkung in dem Satz von Beschränkungen erfüllt ist und für welchen alle zeitlich festgelegten Anforderungen in dem modifizierten zweiten Untersatz getriggert werden können, wenn der aktualisierte Satz zeitlich festgelegter Anforderungen betrachtet wird.

10. Verfahren (30) nach einem der vorhergehenden Ansprüche, umfassend Erweitern des Satzes von Beschränkungen auf Grundlage einer gewünschten Spur, welche auftreten kann, wenn der ursprüngliche Satz zeitlich festgelegter Anforderungen betrachtet wird, jedoch durch einen aktualisierten Satz zeitlich festgelegter Anforderungen an einem Auftreten gehindert wird.

11. Verfahren (30) nach einem der vorhergehenden Ansprüche, wobei das Suchen nach einer Nachweisspur und/oder einer Triggerspur einen Satisfiability-Modulo-Theroies, SMT, -Solver verwendet.

12. Verfahren (50) nach einem der vorhergehenden Ansprüche, wobei jede zeitlich festgelegte Anforderung als ein vereinfachtes universelles Muster, SUP, modelliert wird.

13. Computerprogrammprodukt, umfassend Anweisungen, welche, wenn durch wenigstens einen Prozessor ausgeführt, den wenigstens einen Prozessor konfigurieren, ein Korrekturverfahren (30) nach einem der vorhergehenden Ansprüche auszuführen.

14. Computerlesbares Speichermedium, umfassend Anweisungen, welche, wenn durch wenigstens einen Prozessor ausgeführt, den wenigstens einen Prozessor konfigurieren, ein Korrekturverfahren (30) nach einem der Ansprüche 1 bis 12 auszuführen.

15. Korrekturcomputersystem zum Korrigieren des Betriebs eines Zielcomputersystems, wobei das Korrekturcomputersystem wenigstens einen Prozessor umfasst, welcher dazu eingerichtet ist, ein Korrekturverfahren (50) nach einem der Ansprüche 1 bis 12 auszuführen.

**Revendications**

1. Procédé mis en oeuvre par ordinateur (30) pour corriger le fonctionnement d'un système informatique cible, ledit fonctionnement du système informatique cible étant contraint par un ensemble d'exigences temporisées, dans lequel une exigence temporisée correspond à des contraintes, comportant des contraintes de temporisation, entre des sorties du système informatique cible et des entrées dudit système informatique cible, dans lequel une séquence d'exécution du système informatique cible, appelée trace témoin, satisfait un critère pour la détection d'un conflit entre des exigences temporisées de l'ensemble d'exigences temporisées, appelé incohérence, dans lequel l'ensemble d'exigences temporisées comprend un premier sous-ensemble et un deuxième sous-ensemble d'exigences temporisées,
**caractérisé en ce que**

ledit procédé (30) comprend (S31) l'initialisation d'un ensemble de contraintes sur la base de ladite trace témoin, et l'itération des étapes consistant à :

- (S32) modifier le deuxième sous-ensemble d'exigences temporisées pour obtenir un ensemble mis à jour d'exigences temporisées pour lesquelles chaque contrainte dans l'ensemble de contraintes est satisfaite ;
- (S33) rechercher une trace témoin supplémentaire de l'incohérence de l'ensemble mis à jour d'exigences temporisées ;
- lorsqu'une trace témoin supplémentaire est trouvée : (S34) augmenter l'ensemble de contraintes sur la base de ladite trace témoin supplémentaire ;

dans lequel le fonctionnement du système informatique cible est considéré corrigé lorsqu'aucune trace témoin supplémentaire n'est trouvée pour un ensemble mis à jour d'exigences temporisées.

2. Procédé (30) selon la revendication 1, comprenant l'itération des étapes consistant à

- (S35) rechercher une exigence temporisée dans le premier sous-ensemble, appelée exigence temporisée vide, qui ne peut pas être déclenchée lorsque l'on considère l'ensemble mis à jour d'exigences temporisées ;
- lorsqu'une exigence temporisée vide est trouvée : (S36) déterminer une séquence d'exécution, appelée trace de déclenchement, qui déclenche l'exigence temporisée vide lorsque l'on considère le premier sous-ensemble d'exigences temporisées, et (S37) augmenter l'ensemble de contraintes sur la base de ladite trace de déclenchement ;

dans lequel le fonctionnement du système informatique cible est considéré corrigé lorsqu'aucune trace témoin supplémentaire et aucune l'exigence temporisée vide n'est trouvée pour un ensemble mis à jour d'exigences temporisées.

3. Procédé (30) selon la revendication 2, dans lequel (S37) l'augmentation de l'ensemble de contraintes sur la base d'une trace de déclenchement comprend l'ajout d'une contrainte nécessitant que le deuxième sous-ensemble modifié d'exigences temporisées d'itérations ultérieures n'empêche pas ladite trace de déclenchement de se produire.

4. Procédé (30) selon l'une quelconque des revendications précédentes, dans lequel (S34) l'augmentation de l'ensemble de contraintes sur la base d'une trace témoin supplémentaire de l'incohérence du premier sous-ensemble d'exigences temporisées comprend l'ajout d'une contrainte nécessitant que le deuxième sous-ensemble modifié d'exigences temporisées d'itérations ultérieures empêche ladite trace témoin supplémentaire de se produire.

5. Procédé (30) selon l'une quelconque des revendications précédentes, dans lequel (S34) l'augmentation de l'ensemble de contraintes sur la base d'une trace témoin supplémentaire de l'incohérence de l'ensemble mis à jour d'exigences temporisées qui n'est pas une trace témoin de l'incohérence du premier sous-ensemble d'exigences temporisées comprend l'ajout d'une contrainte nécessitant que :

- soit le deuxième sous-ensemble modifié d'exigences temporisées d'itérations ultérieures empêche ladite trace témoin supplémentaire de se produire ;
- soit ladite trace témoin supplémentaire n'est pas une trace témoin de l'incohérence de l'ensemble mis à jour d'exigences temporisées d'itérations ultérieures.

6. Procédé (30) selon l'une quelconque des revendications précédentes, dans lequel le fonctionnement d'un système informatique cible est initialement contraint par le premier sous-ensemble d'exigences temporisées et la correction du fonctionnement du système informatique cible comprend l'ajout du deuxième sous-ensemble d'exigences temporisées au premier sous-ensemble d'exigences temporisées.

7. Procédé (30) selon l'une quelconque des revendications 1 à 5, comprenant la détermination d'un sous-ensemble de paramètres de l'ensemble d'exigences temporisées sur la base de la trace témoin, et la détermination du premier et du deuxième sous-ensemble sur la base du sous-ensemble de paramètres, dans lequel le deuxième sous-ensemble est modifié uniquement par modification des paramètres dans ledit sous-ensemble de paramètres.

**8.** Procédé (30) selon la revendication 7, dans lequel le deuxième sous-ensemble est modifié de telle manière qu'une distance entre tout deuxième sous-ensemble modifié et deuxième sous-ensemble initial ne dépasse pas une distance maximale prédéterminée.

**9.** Procédé (30) selon l'une quelconque des revendications précédentes, dans lequel le deuxième sous-ensemble d'exigences temporisées est modifié pour obtenir un ensemble mis à jour d'exigences temporisées pour lesquelles chaque contrainte dans l'ensemble de contraintes est satisfaite et pour lesquelles toutes les exigences temporisées dans le deuxième sous-ensemble modifié peuvent être déclenchées lorsque l'on considère l'ensemble mis à jour d'exigences temporisées.

**10.** Procédé (30) selon l'une quelconque des revendications précédentes, comprenant l'augmentation de l'ensemble de contraintes sur la base d'une trace souhaitée qui peut se produire lorsque l'on considère l'ensemble d'origine d'exigences temporisées mais est empêchée de se produire par un ensemble mis à jour d'exigences temporisées.

**11.** Procédé (30) selon l'une quelconque des revendications précédentes, dans lequel, la recherche d'une trace témoin et/ou d'une trace de déclenchement utilise un solveur de Satisfiability Modulo Theories, SMT.

**12.** Procédé (50) selon l'une quelconque des revendications précédentes, dans lequel chaque l'exigence temporisée est modélisée sous la forme d'un modèle universel simplifié, SUP.

**13.** Produit de programme informatique comprenant des instructions qui, lorsqu'elles sont exécutées par au moins un processeur, configurent ledit au moins un processeur pour réaliser un procédé de correction (30) selon l'une quelconque des revendications précédentes.

**14.** Support de stockage lisible par ordinateur comprenant des instructions qui, lorsqu'elles sont exécutées par au moins un processeur, configurent ledit au moins un processeur pour réaliser un procédé de correction (30) selon l'une quelconque des revendications 1 à 12.

**15.** Système informatique de correction pour corriger le fonctionnement d'un système informatique cible, ledit système informatique de correction comprenant au moins un processeur configuré pour réaliser un procédé de correction (50) selon l'une quelconque des revendications 1 à 12.

Fig. 1

Fig. 2

Fig. 3

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **JÉRON T. ; MARKEY N. ; MENTRÉ D. ; NOGUCHI R. ; SANKUR O.** Incremental Methods for Checking Real-Time Consistency. *ADVANCES IN INTELLIGENT DATA ANALYSIS XIX; [LECTURE NOTES IN COMPUTER SCIENCE; LECT.NOTES COMPUTER,* 25 August 2020, ISSN 0302-9743, ISBN 978-3-030-57628-8, 249-264
- Formalization and Analysis of Real-Time Requirements: A Feasibility Study at BOSCH. **POST AMALINDA et al.** ICIAP: INTERNATIONAL CONFERENCE ON IMAGE ANALYSIS AND PROCESSING, 17TH INTERNATIONAL CONFERENCE, NAPLES, ITALY, SEPTEMBER 9-13, 2013. PROCEEDINGS; [LECTURE NOTES IN COMPUTER SCIENCE; LECT.NOTES COMPUTER. SPRINGER, 28 January 2012, 225-2
- Automata for modeling real-time systems. **RAJEEV ALUR ; DAVID L. DILL.** Proceedings of the 17th International Colloquium on Automata, Languages and Programming (ICALP'90). Springer, 1990, vol. 443, 322-335
- Analyzing consistency of formal requirements. **JAN STEFFEN BECKER.** Proceedings of the 18th International Workshop on Automated Verification of Critical Systems (AVOCS'18). EASST, 2019
- RT-inconsistency: a new property for real-time requirements. **AMALINDA POST ; JOCHEN HOENICKE ; ANDREAS PODELSKI.** Proceedings of the 14th International Conference on Fundamental Approaches to Software Engineering (FASE'11). Springer, 2011, vol. 6603